# EUROPÄISCHE PATENTSCHRIFT

(11) **EP 1 162 394 B1**
(45) Veröffentlichungstag und Bekanntmachung des Hinweises auf die Patenterteilung: **12.10.2005**
(21) Anmeldenummer: 01112680.2
(22) Anmeldetag: 25.05.2001
(51) Int. Cl.: F16J 15/16, F16J 15/32

(54) **Dichtelement für hydraulische Kolben-Zylinder-Anordnungen**
Seal element for hydraulic piston-cylinder arrangements
Elément d'étanchéité pour ensembles piston-cylindre hydrauliques

(30) Priorität: 09.06.2000 DE 10028672
(43) Veröffentlichungstag der Anmeldung: 12.12.2001
(73) Patentinhaber: FTE automotive GmbH, 96106 Ebern (DE)
(72) Erfinder: Sauer, Herbert, 96176 Pfarrweisach-Junkersdorf (DE); Tröster, Rudolf, 96169 Lauter-Deusdorf (DE)
(74) Vertreter: Oppermann, Mark

(56) Entgegenhaltungen:
- DE-A- 4 339 652
- US-A- 4 189 160
- US-A- 4 345 771
- US-A- 5 865 442
- US-A- 6 035 990
- PATENT ABSTRACTS OF JAPAN vol. 008, no. 120 (M-300), 6. Juni 1984 (1984-06-06) & JP 59 026669 A (SAKAGAMI SEISAKUSHO:KK), 10. Februar 1984 (1984-02-10)

## Beschreibung

Die vorliegende Erfindung bezieht sich auf eine hydraulische Kolben-Zylinder-Anordnung. Insbesondere bezieht sich die Erfindung auf ein Dichtelement an einem Geber- oder Nehmerzylinder für ein hydraulisches Kupplungsbetätigungs- oder Bremssystem in Kraftfahrzeugen, wie sie massenweise im Automobilbau zum Einsatz kommen.

Derartige Dichtelemente werden in Kupplungsgeberzylindern oder Hauptbremszylindern sowohl als Primär- als auch als Sekundär dichtung eingesetzt. Die Primärdichtung dient dazu, den Druckraum der jeweiligen Kolben-Zylinder-Anordnung zum drucklosen Nachlaufraum hin abzudichten, während die Sekundärdichtung den drucklosen Nachlaufraum zur Atmosphäre hin abdichtet. Grundsätzlich haben diese Dichtelemente einen Grundkörper und eine sich davon weg erstreckende dynamische Dichtlippe, die im eingebauten Zustand des Dichtelements mit ihrer Dichtkontur mit einer relativ zum Dichtelement bewegbaren Lauffläche der Kolben-Zylinder-Anordnung zusammenwirkt. Bei einer Relativbewegung zwischen der dynamischen Dichtlippe und der Lauffläche kommt es aufgrund von Reibung sowohl im Druckbereich als auch im Nachlaufbereich häufig zu Stick-Slip-Effekten, wobei sich die dynamische Dichtlippe (oder einzelne Bereiche davon) über den gesamten Umfang (oder Teilabschnitte) der Lauffläche jeweils gleichzeitig spannt und entspannt. Die dabei unabhängig von der Bauart der Kolben-Zylinder-Anordnung (Normalausführung: bewegtes Dichtelement und stehende Lauffläche / Plungerkolbenausführung: stehendes Dichtelement und bewegte Lauffläche) sowie der Funktion des Dichtelements (Primärdichtung / Sekundärdichtung) entstehenden, hochfrequenten Quietschgeräusche werden im Automobilbau als komfortmindernd angesehen und sind häufig Gegenstand von Kundenbeanstandungen.

Im Stand der Technik fehlt es nicht an Vorschlägen, wie solchen Quietschgeräuschen zu begegnen ist. So ist es bekannt, die Lauffläche bzw. das Dichtelement zur Vermeidung der Quietschgeräusche mit zusätzlichen, speziellen Fetten zu schmieren, die in entsprechenden Schmiertaschen bzw. Depots aufgenommen sind (z.B. DE-A-41 09 125, DE-C-41 24 531). Diese Fette werden jedoch im Betrieb der jeweiligen Kolben-Zylinder-Anordnung unter Aufbrauch des Depots von der (den) Dichtlippe(n) abgestreift bzw. von der Bremsflüssigkeit abgelöst, so daß die Quietschgeräusche nicht dauerhaft beseitigt werden können.

Auch wurde vorgeschlagen (z.B. DE-C-196 29 348), zur Vermeidung der Quietschgeräusche die Rauhigkeit der Lauffläche entsprechend zu konditionieren, d.h. die zu den Dichtungen relativ bewegliche Lauffläche mit Vertiefungen zu versehen, welche in dem mit den Dichtlippen zusammenwirkenden Laufflächenbereich eine kreuzförmig verlaufende Struktur bilden. Diese Ausbildung der Lauffläche erfordert jedoch zusätzliche Arbeitsschritte und kann leicht zu einem stärkeren Dichtlippenverschleiß führen.

Des weiteren offenbart die DE-A-44 15 731 eine Dichtungsanordnung zur Abdichtung benachbarter, mit Flüssigkeit gefüllter Zylinderräume in einem Zweikreis-Bremszylinder, der einen in dem Zylinder in axialer Richtung beweglich schwimmend angeordneten Kolben und eine auf dem Kolben angeordnete Dichtmanschette mit einer Dichtlippe aufweist, welche mit ihrer Außenfläche radial an der Zylinderwandung anliegt. Um beim Betätigen der Bremse quietschende Geräusche zu vermeiden, wird hier vorgeschlagen, die Außenfläche der Dichtlippe ballig auszubilden, derart, daß ein Wulst radial außen an der Dichtlippe hervorsteht. Genauer gesagt handelt es sich hierbei um einen Ringwulst, der im Schnitt gesehen symmetrisch durch einen Kreisbogen vorbestimmten Durchmessers beschrieben wird und zu beiden Seiten des Kreisbogens mit einem entgegengesetzten Kreisbogen kleineren Radius ausläuft.

Diese ballige Ausbildung der Dichtlippenaußenfläche bezweckt zum einen, daß die Abdichtung nicht durch eine scharfe Dichtkante erfolgt, sondern über einen relativ großen Radius, wodurch eine gute Schmierkeilbildung bei Vorwärts- und Rückwärtsbewegungen des schwimmenden Kolbens möglich sein soll. Zum anderen wird bezweckt, daß die Dichtlippe bei beginnendem Druckaufbau nicht vollständig an der Zylinderwandung zur Anlage kommt, wodurch Geräusche infolge von Schwingungen bei beginnender Bewegung und zunehmendem Druck vermieden werden sollen. Ein Nachteil dieses Stands der Technik ist jedoch insbesondere darin zu sehen, daß das verbesserte Stick-Slip-Verhalten der Dichtmanschette mit einer für bestimmte Anwendungsfälle ungenügenden dynamischen Dichtwirkung der Dichtmanschette erkauft wird.

Ferner offenbart die US-A-6 035 990 eine Ausrückvorrichtung für eine Reibungskupplung von Fahrzeugen, die ein konzentrisch zu einer Getriebeeingangswelle angeordnetes, an einem Getriebegehäuse befestigtes Druckgehäuse enthält, wobei am Druckgehäuse eine radial zur Getriebeeingangswelle und zu einer Längsbohrung im Druckgehäuse beabstandete Führungshülse angeordnet ist, auf der ein Ringkolben verschiebbar geführt ist, der einen Druckraum axial begrenzt. Zur Abdichtung des Ringkolbens ist hier eine Dichtung vorgesehen, die V-förmig gespreizte Dichtlippen aufweist, wobei die Dichtung ein Querschnittsprofil mit in definierter Weise asymmetrisch zueinander angeordneten Dichtlippen aufweist, um an den Dichtlippen eine gleiche Beanspruchung und damit gleiche Verschleißwerte zu erzielen.

Des weiteren wird in der US-A-4 345 771 in prinzipieller Übereinstimmung mit dem eingangs geschilderten Stand der Technik eine Dichtmanschette vorgeschlagen, deren Dichtfläche mit einer umlaufenden, winkligen Aussparung oder Nut versehen ist, die der Aufnahme von Schmieröl dient und somit einen ruhigen und stabilen Betrieb gewährleisten soll.

Die US-A-4 189 160 offenbart eine Dichtmanschette für eine hydraulische Kolben-Zylinder-Anordnung, die eine Außenlippe mit einer Führungskante hat, welche angepaßt ist, im eingebauten Zustand der Dichtmanschette entlang einer Zylinderwand zu gleiten. Die Führungskante schließt mit der Zylinderachse einen Winkel ein, welcher kleiner ist als der Winkel, den der Rest der Außenlippe mit der Zylinderachse einschließt. Im unverformten Zustand der Dichtmanschette liegt der Winkel der Führungskante zwischen 1° und 15°. Im eingebauten Zustand der Dichtmanschette wird somit ein keilförmiger Spalt zwischen der Führungskante und der Zylinderwand ausgebildet, in dem die Hydraulikflüssigkeit für eine Verringerung des Gleitwiderstands der Dichtmanschette sorgt.

Aus der DE-A-198 02 463 ist schließlich ein Dichtungsring zur Abdichtung zwischen zwei relativ zueinander axial bewegten Bauteilen bekannt, der eine ringförmige, radial nachgiebige Dichtlippe besitzt, die an ihrer Arbeitsseite, welche im Einsatz dem mit ihr zusammenwirkenden Bauteil radial zugewandt ist, zum freien Lippenende hin mit einer konvexen Rundung ausläuft. An der Arbeitsseite weist die Dichtlippe eine den im Einsatz möglichen Kontaktbereich mit dem zusammenwirkenden Bauteil beinhaltende, bereits im unbeaufschlagten Grundzustand im Querschnitt gesehen durchgehend konvex gekrümmte Lippenfläche auf. Diese ist in dem dem freien Lippenende zugeordneten vorderen Bereich stärker gekrümmt als in dem sich daran anschließenden hinteren Bereich. Hierbei ist die Auslegung insbesondere so getroffen, daß die Dichtlippe im Normalbetrieb nur mit dem weniger gekrümmten Bereich der Lippenfläche am abzudichtenden Bauteil anliegt. Durch diese Ausgestaltung des Dichtungsrings soll eine gleichmäßigere Pressung erzielt werden, mit einem annähernd parabolischen Verlauf der Pressungsverteilung in einem sehr breiten Betriebsbereich.

Der Erfindung liegt die Aufgabe zugrunde, eine hydraulische Kolben-Zylinder-Anordnung mit einem einfach ausgebildeten Dichtelement zu schaffen, welches dauerhaft ein verbessertes Geräuschverhalten aufweist, ohne gleichzeitig übermäßige Leckagen zu gestatten.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 16.

Erfindungsgemäß ist bei einer hydraulischen Kolben-Zylinder-Anordnung, insbesondere einem Geber- oder Nehmerzylinder von hydraulischen Kupplungsbetätigungs- oder Bremssystemen in Kraftfahrzeugen, die ein Dichtelement hat, das einen Grundkörper und eine sich davon weg erstreckende dynamische Dichtlippe aufweist, welche im eingebauten Zustand des Dichtelements mit einer konvex gekrümmten Dichtkontur mit einer relativ zum Dichtelement bewegbaren Lauffläche der Kolben-Zylinder-Anordnung zusammenwirkt, um einen Raum der Kolben-Zylinder-Anordnung abzudichten, die Dichtkontur der dynamischen Dichtlippe auf ihrer im eingebauten Zustand des Dichtelements dem abzudichtenden Raum zugewandten Seite stärker gekrümmt als auf ihrer davon abgewandten Seite, so daß sich zwischen der dynamischen Dichtlippe und der Lauffläche ein unsymmetrischer Pressungsverlauf p(x) einstellt, welcher auf der dem abzudichtenden Raum zugewandten Seite steiler ansteigt, wobei die Dichtkontur der dynamischen Dichtlippe im unverformten Zustand des Dichtelements zwei Kreisbogenabschnitte mit unterschiedlichen Radien aufweist, von denen der Kreisbogenabschnitt mit kleinerem Radius auf der im eingebauten Zustand des Dichtelements dem abzudichtenden Raum zugewandten Seite der Dichtkontur liegt, und wobei im Betrieb stets beide Kreisbogenabschnitte mit der Lauffläche der Kolben-Zylinder-Anordnung zusammenwirken.

Im Ergebnis wird eine hydraulische Kolben-Zylinder-Anordnung mit einem Dichtelement vorgeschlagen, bei dem sich infolge einer bestimmten, einfachen Geometrie der Dichtkontur der dynamischen Dichtlippe im Betrieb ein unsymmetrischer Pressungsverlauf p(x) über den Anlagebereich zwischen der dynamischen Dichtlippe und der Lauffläche einstellt, welcher bei Kolbenbetätigungsgeschwindigkeiten im Bereich der Haftreibung (Anfahrreibung) und Mischreibung, d.h. im vorderen Bereich der sogenannten Stribeck-Kurve dafür sorgt, daß im druckerzeugenden Vorlauf des Dichtelements stets ein Schmierfilm von ausreichender Dicke unabgestreift an der Lauffläche verbleibt, während das Dichtelement im druckabbauenden Rücklauf ein gutes Rückfördervermögen von Hydraulikflüssigkeit aufzeigt, so daß an der Lauffläche ein Schmierfilm von vorbestimmter Dicke dauerhaft gewährleistet ist und unerwünschten Geräuschentwicklungen zuverlässig begegnet wird.Dabei weist die Dichtkontur der dynamischen Dichtlippe in einer insbesondere herstellungstechnisch vorteilhaften Ausgestaltung des Dichtelements im unverformten Zustand des Dichtelements zwei Kreisbogenabschnitte mit unterschiedlichen Radien auf, wobei der Kreisbogenabschnitt mit kleinerem Radius auf der im eingebauten Zustand des Dichtelements dem abzudichtenden Raum zugewandten Seite der Dichtkontur liegt, um den unsymmetrischen Pressungsverlauf p(x) mit steilerem Anstieg auf der dem abzudichtenden Raum zugewandten Seite definiert und auf einfache Weise zu gewährleisten. Es hat sich gezeigt, daß ein besonders guter Kompromiß zwischen dem Lauf- und dem Dichtverhalten des Dichtelements erzielt werden kann, wenn hier das Verhältnis des größeren Radius zum kleineren Radius der Kreisbogenabschnitte zwischen 3.0 und 9.0, mehr bevorzugt zwischen 5.0 und 6.0 liegt, wie im Patentanspruch 2 angegeben. 3

Dadurch, daß entsprechend dem Patentanspruch 3 die Dichtkontur der dynamischen Dichtlippe zwischen den Kreisbogenabschnitten einen geraden Abschnitt aufweist, wird der Pressungsverlauf p(x) gestreckt und ein besseres Rückförderungsvermögen erzielt. Durch geeignete Wahl der Länge des geraden Abschnitts der Dichtkontur kann somit der Pressungsverlauf p(x) auf einfache Weise den jeweiligen Erfordernissen entsprechend angepaßt werden. Es hat sich als im Hinblick auf das Lauf- und Dichtverhalten des Dichtelements besonders vorteilhaft erwiesen, wenn hier das Verhältnis der Länge des geraden Abschnitts zum Radius des kleineren Kreisbogenabschnitts der Dichtkontur kleiner gleich 2, mehr bevorzugt kleiner gleich 1 ist, wie im Patentanspruch 6 angegeben.

Gemäß dem Patentanspruch 4 geht der gerade Abschnitt der Dichtkontur vorzugsweise übergangslos in die Kreisbogenabschnitte über, wodurch ein gleichmäßiger Pressungsverlauf p(x) ohne abrupte Steigungsänderungen erzielt wird.

Der Patentanspruch 5 sieht vor, daß der gerade Abschnitt der Dichtkontur im unverformten Zustand des Dichtelements parallel zu dessen Mittelachse verläuft, was Vorteile für die Herstellung der Dichtkontur mit sich bringt, insbesondere eine einfache Ausbildung des Werkzeugs zur Herstellung des Dichtelements gestattet.

Es hat sich weiterhin gezeigt, daß für einen besonders guten Kompromiß zwischen dem Reib- und dem Dichtverhalten des Dichtelements entsprechend dem Patentanspruch 7 im unverformten Zustand des Dichtelements die Differenz zwischen dem Durchmesser der dynamischen Dichtlippe an der Dichtkontur und dem Nenndurchmesser der Lauffläche 1.5 bis 9.0 %, mehr bevorzugt 2.5 bis 6.5 % des Nenndurchmessers der Lauffläche betragen sollte.

Gemäß dem Patentanspruch 8 kann in an sich bekannter Weise auch eine sich vom Grundkörper weg erstreckende statische Dichtlippe vorgesehen sein, welche zusammen mit der dynamischen Dichtlippe eine ringförmige Nut begrenzt, deren Nutgrund eine über den Umfang des Dichtelements im wesentlichen konstante Tiefe aufweist. Bei einer solchen Ausbildung des Dichtelements und Nenndurchmessern der mit dem Dichtelement zusammenwirkenden Lauffläche entsprechend dem Patentanspruch 9, d.h. einem Nenndurchmesser zwischen 10.0 und 24.0 mm, mehr bevorzugt zwischen 14.0 und 20.0 mm, wurden im Hinblick auf die anmeldungsgemäße Aufgabenstellung besonders gute Ergebnisse mit der Dichtelementausbildung nach dem Patentanspruch 10 erhalten, gemäß der im unverformten Zustand des Dichtelements der Nutgrund bezüglich einer gedachten Ebene, die senkrecht zur Mittelachse des Dichtelements verläuft und im Schnitt gesehen den einem freien Ende der dynamischen Dichtlippe nächstgelegenen Mittelpunkt der Kreisbogenabschnitte der Dichtkontur enthält, in einer zur Mittelachse parallelen Richtung vom Grundkörper her kommend zwischen 1.5 mm vor und 1.0 mm hinter der Ebene liegt.

Nach der Lehre des Patentanspruchs 11 schließt sich an die konvex gekrümmte Dichtkontur der dynamischen Dichtlippe an deren freien Ende vorzugsweise eine im unverformten Zustand des Dichtelements im wesentlichen ringzylindrische Stützschulter an, welche insbesondere die Herstellung und das Ausformen des Dichtelements erleichtert, bei entsprechender Dimensionierung jedoch auch für eine Versteifung der dynamischen Dichtlippe und eine entsprechende Änderung des Pressungsverlaufs p(x) herangezogen werden kann.

Ferner ist es entsprechend dem Patentanspruch 12 möglich, für bestimmte, kritische Anwendungsfälle an dem Grundkörper auf der Seite der dynamischen Dichtlippe noch eine weitere Dichtlippe vorzusehen, die im eingebauten Zustand des Dichtelements zusammen mit der dynamischen Dichtlippe ein Reservoir zur Aufnahme eines zusätzlichen Schmiermittels ausbildet, was sich insbesondere für Sekundärdichtelemente anbietet.

Es ist weiterhin vorteilhaft, wenn das Dichtelement gemäß dem Patentanspruch 13 einteilig ausgebildet ist und aus EPDM besteht, nach der Lehre des Patentanspruchs 14 eine Härte von 70 bis 80 Shore A aufweist und gemäß dem Patentanspruch 15 eine Zugfestigkeit größer gleich 16 N/mm² hat.

Schließlich sieht der Patentanspruch 16 vor, daß der Grundkörper des Dichtelements stirnseitig nach radial außen und nach radial innen mit jeweils einer Schräge versehen ist und sich das Dichtelement im eingebauten Zustand mit seinem Grundkörper an einem komplementär ausgebildeten Stützring abstützt. Dieses Abstützen bzw. Kapseln des Grundkörpers hat den Vorteil, daß sich das Dichtelement bei Druckbeaufschlagung nicht übermäßig verformen bzw. die dynamische Dichtlippe dem Druck nicht übermäßig ausweichen kann, wodurch der anmeldungsgemäß gewollte Pressungsverlauf p(x) beeinträchtigt werden könnte. Hinzu tritt hier eine durch diese Abstützung bzw. Kapselung des Dichtelements bewirkte vorteilhafte Verringerung der Volumensaufnahme des Gesamtsystems, einhergehend mit der Möglichkeit, beim Einsatz des Dichtelements als Primärdichtung den Überfahrweg über Druckausgleichs- bzw. Nachlaufnuten oder -öffnungen enger zu tolerieren.

Im folgenden wird die Erfindung anhand bevorzugter Ausführungsbeispiele unter Bezugnahme auf die beigefügte Zeichnung näher erläutert. Darin zeigen:
- Fig. 1: eine abgebrochene Schnittansicht durch eine Kolben-Zylinder-Anordnung in Plungerkolbenausführung mit erfindungsgemäß ausgebildeten Primär- und Sekundärdichtelementen, die ebenso wie ein O-Ring am Zylindergehäuse im unverformten Zustand eingezeichnet sind,
- Fig. 2: ein vergrößerter, radial geführter Schnitt durch das Primärdichtelement gemäß Fig. 1 im unverformten Zustand,
- Fig. 3: eine vergrößerte Darstellung des Anlagebereichs zwischen der dynamischen Dichtlippe des Primärdichtelements und der Lauffläche am Kolben im eingebauten, verformten Zustand des Primärdichtelements entsprechend dem Kreis III in Fig. 2, wobei der dazugehörige Pressungsverlauf p(x) qualitativ eingezeichnet ist und der besseren Übersichtlichkeit halber auf die Schraffuren verzichtet wurde,
- Fig. 4: ein vergrößerter, radial geführter Schnitt durch eine Variante des Primärdichtelements im unverformten Zustand,
- Fig. 5: ein vergrößerter, radial geführter Schnitt durch das Sekundärdichtelement gemäß Fig. 1 im unverformten Zustand und
- Fig. 6: ein vergrößerter, radial geführter Schnitt durch das eingebaute Sekundärdichtelement gemäß Fig. 1, wobei lediglich die dynamische Dichtlippe im verformten Zustand dargestellt ist.

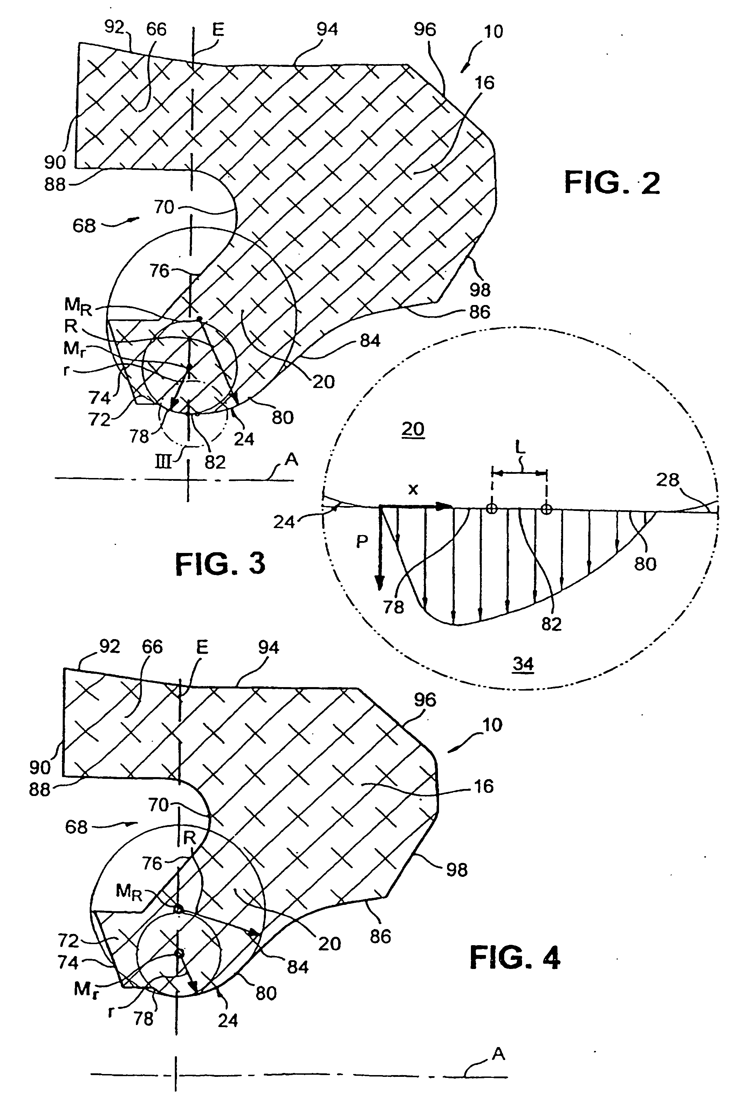

Vorab sei noch angemerkt, daß in den Fig. 2 bis 6 lediglich radial geführte Schnitte, d.h. Profilquerschnitte der ringförmigen Dichtelemente dargestellt sind. Von Schnittansichten mit Darstellung der umlaufenden Kanten der Dichtelemente wurde der besseren Übersichtlichkeit halber abgesehen. Im folgenden soll die Geometrie der Dichtelemente in erster Linie bezogen auf diese Profilquerschnitte, d.h. zweidimensional beschrieben werden. Für den Fachmann ist ersichtlich, daß es sich mit Ergänzung der dritten Dimension
bei einem senkrecht zur Mittelachse des Dichtelements verlaufenden Profilquerschnittsbereich tatsächlich um einen ebenen Kreisringflächenabschnitt handelt,
bei einem parallel zur Mittelachse des Dichtelements verlaufenden Profilquerschnittsbereich um einen Zylinderflächenabschnitt,
bei einem geraden Profilquerschnittsbereich, der zu der Mittelachse des Dichtelements mit einem Winkel angestellt ist, um einen konischen Flächenabschnitt und
bei einem gekrümmten Profilquerschnittsbereich um einen auch in Längsrichtung gekrümmten Flächenabschnitt, mit dem Sonderfall eines Kreisbogens im Profilquerschnitt, bei dem es sich tatsächlich um einen Torusflächenabschnitt des Dichtelements handelt.

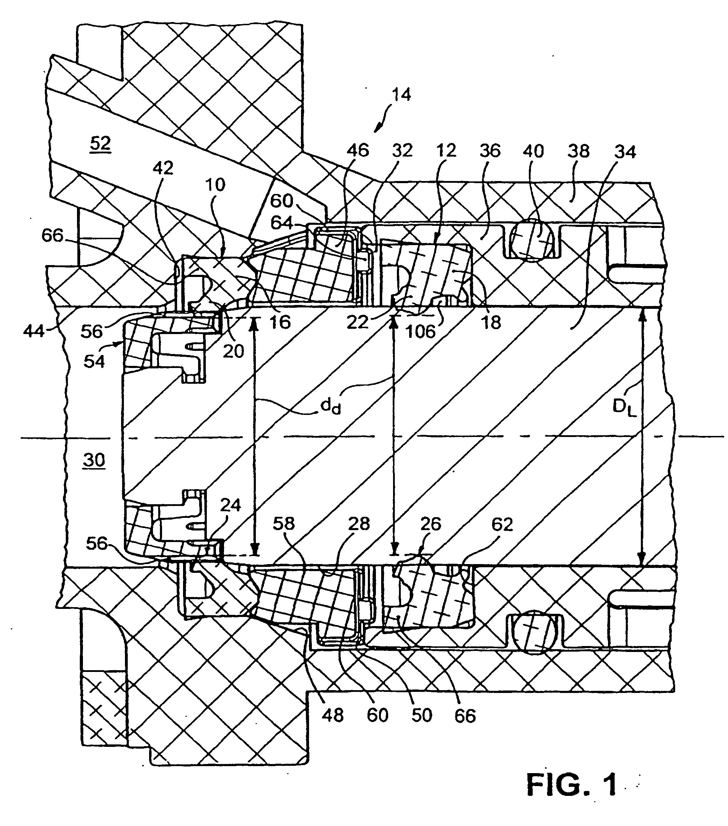

Wie in den Fig. 1, 2, 4, 5 und 6 deutlich zu erkennen ist, hat ein Primärdichtelement 10 bzw. ein Sekundärdichtelement 12 für eine hydraulische Kolben-Zylinder-Anordnung 14 einen Grundkörper 16 bzw. 18 und eine sich davon weg erstreckende dynamische Dichtlippe 20 bzw. 22. Die dynamische Dichtlippe 20 bzw. 22 wirkt im eingebauten Zustand des Primär- bzw. Sekundärdichtelements 10, 12 mit einer konvex gekrümmten Dichtkontur 24 bzw. 26 mit einer relativ zum Primär- bzw. Sekundärdichtelement 10, 12 bewegbaren Lauffläche 28 der Kolben-Zylinder-Anordnung 14 zusammen, um im Falle eines Primärdichtelements 10 einen Druckraum 30 der Kolben-Zylinder-Anordnung 14 bzw. im Falle eines Sekundärdichtelements 12 einen Nachlaufraum 32 der Kolben-Zylinder-Anordnung 14 abzudichten. Wesentlich ist, daß die Dichtkontur 24 bzw. 26 der dynamischen Dichtlippe 20 bzw. 22 auf ihrer im eingebauten Zustand des Primär- bzw. Sekundärdichtelements 10, 12 dem jeweils abzudichtenden Raum 30 bzw. 32 zugewandten Seite stärker gekrümmt ist als auf ihrer davon abgewandten Seite, so daß sich zwischen der dynamischen Dichtlippe 20 bzw. 22 und der Lauffläche 28 ein unsymmetrischer Pressungsverlauf p(x) einstellt (Fig. 3), welcher auf der dem jeweils abzudichtenden Raum 30 bzw. 32 zugewandten Seite steiler ansteigt.

In Fig. 1 ist beispielhaft für eine hydraulische Kolben-Zylinder-Anordnung 14 ein Geberzylinder eines hydraulischen Kupplungsbetätigungssystems für Kraftfahrzeuge in Grundstellung dargestellt, der einen axial beweglichen Plungerkolben 34 aufweist, dessen Außenumfang die gegenüber den feststehenden Dichtelementen 10, 12 relativ bewegbare und damit zusammenwirkende Lauffläche 28 ausbildet. Der Plungerkolben 34 kann aus Guß, einem NE-Metall oder Kunststoff bestehen, wobei die Lauffläche 28 vorzugsweise eine Rauhtiefe kleiner gleich 2 µm aufweist. Der Plungerkolben 34 ist in einer Führungshülse 36 aus Kunststoff geführt, die in einem ebenfalls aus Kunststoff bestehenden Zylindergehäuse 38 der Kolben-Zylinder-Anordnung 14 befestigt ist. Zwischen der Führungshülse 36 und dem Zylindergehäuse 38 ist die Kolben-Zylinder-Anordnung 14 zur Atmosphäre hin mittels einer statischen Dichtung in Form eines O-Rings 40 abgedichtet.

Das Primärdichtelement 10 ist an einem Absatz 42 einer Zylinderbohrung 44 im Zylindergehäuse 38 mit einem eine elastische Verformung des Primärdichtelements 10 gestattenden Axialspiel angeordnet und in dieser Stellung durch einen Stützring 46 gehalten, auf den später noch näher eingegangen werden wird. Der Stützring 46 liegt zwischen einem konischen Flächenabschnitt 48 der Zylinderbohrung 44 und einer ringförmigen Stirnfläche 50 der Führungshülse 36 und ist somit in axialer Richtung des Zylindergehäuses 38 festgelegt. In der dargestellten Grundstellung der Kolben-Zylinder-Anordnung 14 besteht eine hydraulische Verbindung zwischen dem Druckraum 30, dem Nachlaufraum 32 und einem Kanal 52 im Zylindergehäuse 38, der mit einem Vorratsbehälter (nicht dargestellt) verbunden ist. Dazu ist entweder der Plungerkolben 34 oder, wie im dargestellten Ausführungsbeispiel, ein am Plungerkolben 34 befestigtes Ringteil 54 am Umfang mit Nuten 56 versehen, die unter der dynamischen Dichtlippe 20 des Primärdichtelements 10 hinweg eine Verbindung zwischen dem Druckraum 30 und einem Ringspalt 58 gestatten, welcher sich infolge der Konusaufnahme des Stützrings 46 an dem konischen Flächenabschnitt 48 der Zylinderbohrung 44 zwischen der Innenumfangsfläche des Stützrings 46 und der Lauffläche 28 des Plungerkolbens 34 definiert einstellt. Der Ringspalt 58 selbst kommuniziert direkt mit dem Nachlaufraum 32, welcher mit dem Kanal 52 über Nuten 60 in Verbindung steht, die sich in zunächst radialer und dann axialer Richtung über die Stirnseite bzw. den Außenumfang des Stützrings 46 erstrecken. Die oben beschriebene Verbindung des Nachlaufraums 32 zum Druckraum 30 hin wird unterbrochen, sobald die dynamische Dichtlippe 20 mit ihrer Dichtkontur 24 bei einer Bewegung des Plungerkolbens 34 nach links in Fig. 1 über die Lauffläche 28 des Plungerkolbens 34 kommt und den Druckraum 30 zum Nachlaufraum 32 hin abdichtet, damit im Druckraum 30 ein an einen Nehmerzylinder (nicht dargestellt) anlegbarer Druck aufgebaut werden kann.

Das Sekundärdichtelement 12 ist an einem Absatz 62 am Innenumfang der Führungshülse 36 angeordnet. Dabei ist ein eine elastische Verformung des Sekundärdichtelements 12 gestattendes Axialspiel zwischen dem Sekundärdichtelement 12 und einer Ringschulter 64 des Stützrings 46 vorgesehen. Die Nuten 60 erstrekken sich auch durch die Ringschulter 64 hindurch, welche dafür sorgt, daß das Sekundärdichtelement 12 die hydraulische Verbindung zwischen dem Nachlaufraum 32 und dem Kanal 52 nicht unterbrechen kann. Die dynamische Dichtlippe 22 des Sekundärdichtelements 12 befindet sich mit ihrer Dichtkontur 26 stets über der Lauffläche 28 des Plungerkolbens 34, um den Nachlaufraum 32 zur Atmosphäre bzw. Umgebung hin abzudichten.

In Fig. 2 ist nun der Profilquerschnitt des einteilig ausgebildeten Primärdichtelements 10 im unverformten, d.h. nicht eingebauten Zustand des Primärdichtelements 10 dargestellt. Hinsichtlich der Grobgeometrie des Primärdichtelements 10 ist zunächst deutlich zu erkennen, daß das Primärdichtelement 10 auch eine sich vom Grundkörper 18 weg erstreckende statische Dichtlippe 66 aufweist, die zusammen mit der dynamischen Dichtlippe 20 eine ringförmige Nut 68 begrenzt, deren Nutgrund 70 eine über den Umfang des Primärdichtelements 10 im wesentlichen konstante Tiefe aufweist.

Die dynamische Dichtlippe 20 weist an ihrem freien Ende eine im unverformten Zustand im wesentlichen ringzylindrische Stützschulter 72 auf, welche stirnseitig mit einem geraden Profilquerschnittsbereich 74 abschließt, der mit der nicht maßstabsgerecht angedeuteten Mittelachse A des Primärdichtelements 10 in Richtung des Grundkörpers 16 gesehen einen spitzen Winkel einschließt. Am Außenumfang der dynamischen Dichtlippe 20 schließt sich an die Stützschulter 72 ein gerader Profilquerschnittsbereich 76 an, welcher in Richtung des Grundkörpers 16 gesehen mit der Mittelachse A einen stumpfen Winkel einschließt und über einen den Nutgrund 70 bildenden Radius zur statischen Dichtlippe 66 übergeht. Innenumfangsseitig der dynamischen Dichtlippe 20 schließt sich an die Stützschulter 72 ggf. über einen sehr kleinen Radius die Dichtkontur 24 an.

Die Dichtkontur 24 weist zwei Kreisbogenabschnitte 78, 80 mit unterschiedlichen Radien r, R auf, von denen der Kreisbogenabschnitt 78 mit kleinerem Radius r auf der im eingebauten Zustand des Primärdichtelements 10 dem Druckraum 30 zugewandten Seite der Dichtkontur 24 liegt, um im eingebauten Zustand des Primärdichtelements 10 einen unsymmetrischen Pressungsverlauf p(x) zwischen der dynamischen Dichtlippe 20 und der Lauffläche 28 mit einem druckraumseitig steileren Anstieg zu erzielen. Im dargestellten Ausführungsbeispiel ist zwischen den Kreisbogenabschnitten 78, 80 der Dichtkontur 24 ein gerader Profilquerschnittsbereich 82 eingefügt, um den Pressungsverlauf p(x) zu strecken und damit im Betrieb größere Schmierfilmdicken an der Lauffläche 28 zu gestatten. Der gerade Pröfilquerschnittsbereich 82 geht zu beiden Seiten an den in den Fig. 2 und 3 mit kleinen Kreisen angedeuteten Stellen übergangslos in die Kreisbogenabschnitte 78, 80 über und verläuft im unverformten Zurstand des Primärdichtelements 10 parallel zu dessen Mittelachse A. Um die hier wesentliche Geometrie der Dichtkontur 24 weiter zu veranschaulichen, sind in Fig. 2 zu den Kreisbogenabschnitten 78, 80 noch vollständige Kreise sowie die jeweils dazu gehörigen Kreismittelpunkte Mᵣ und M_{R} eingezeichnet.

Der Kreisbogenabschnitt 80 der Dichtkontur 24 geht dann auf seiner in Fig. 2 rechten Seite übergangslos in einen geraden Profilquerschnittsbereich 84 der dynamischen Dichtlippe 20 über, welcher in Richtung des Grundkörpers 16 gesehen mit der Mittelachse A einen stumpfen Winkel einschließt und an den sich im dargestellten Ausführungsbeispiel über einen relativ großen Radius ein gerader Profilquerschnittsbereich 86 des Grundkörpers 16 anschließt, der bezüglich der Mittelachse A flacher angestellt ist als der gerade Profilquerschnittsbereich 84.

Die statische Dichtlippe 66 hat innenumfangsseitig einen sich an den Nutgrund 70 anschließenden Profilquerschnittsbereich 88, der parallel zur Mittelachse A verläuft, und endet mit einem senkrecht zur Mittelachse A stehenden Profilquerschnittsbereich 90. Am Außenumfang der statischen Dichtlippe 66 ist wiederum ein gerader Profilquerschnittsbereich 92 vorgesehen, über den die statische Dichtlippe 66 in den Grundkörper 16 übergeht und der in Richtung des Grundkörpers 16 gesehen mit der Mittelachse A einen spitzen Winkel einschließt, so daß sich die statische Dichtlippe 66 in Richtung des Grundkörpers 16 verjüngt.

Der Grundkörper 16 hat schließlich am Außenumfang einen zur Mittelachse A parallelen Profilquerschnittsbereich 94 und ist stirnseitig nach radial außen und nach radial innen mit jeweils einer Schräge 96, 98 versehen. Wie die Fig. 1 zeigt, ist der Stützring 46 auf seiner vom Nachlaufraum 32 abgewandten Seite komplementär zur Stirnseite des Grundkörpers 16 ausgebildet, wodurch er den Grundkörper 16 des eingebauten Primärdichtelements 10 quasi kapselt und somit verhindert, daß die dynamische Dichtlippe dem Druck im Betrieb der Kolben-Zylinder-Anordnung 14 übermäßig ausweichen kann.

In Fig. 3 ist in qualitativer Weise der Pressungsverlauf p(x) dargestellt, der sich infolge der beschriebenen Ausbildung der Dichtkontur 24 zwischen der Lauffläche 28 des Plungerkolbens 34 und der dynamischen Dichtlippe 20 des Primärdichtelements 10 einstellt. Deutlich zu erkennen ist, daß sich der gerade Profilquerschnittsbereich 82 der Dichtkontur 24 im Anlagebereich zwischen der dynamischen Dichtlippe 20 und der Lauffläche 28 befindet. Mit anderen Worten gesagt wirken auch bei Vorsehen eines geraden Profilquerschnittsbereichs 82 zwischen den Kreisbogenabschnitten 78, 80 der Dichtkontur 24 im Betrieb stets beide Kreisbogenabschnitte 78, 80 mit der Lauffläche 28 zusammen.

Ausgehend von der Druckseite (Druckraum 30)
steigt der Pressungsverlauf p(x) im Bereich des radiuskleineren Kreisbogenabschnitts 78 moderat steil und im wesentlichen linear an,
bevor er nach einem kurzen Peak im Bereich des radiuskleineren Kreisbogenabschnitts 78, d.h. vor Beginn des geraden Profilquerschnittsbereichs 82
über den geraden Profilquerschnittsbereich 82 und einen Teil des von der Druckseite abgewandten, zum Nachlaufraum 32 hin gewandten radiusgrößeren Kreisbogenabschnitts 80 mit zunehmender Strecke x stärker, gegenüber dem Anstieg aber stets flacher abfällt.

Dieser sich statisch wie dynamisch qualitativ nahezu identisch einstellende Pressungsverlauf p(x) hat zur Folge, daß
sowohl bei einem einen Druck im Druckraum 30 erzeugenden Hub des Plungerkolbens 34 nach links in Fig. 1
als auch bei einem den Druck im Druckraum 30 abbauenden Hub des Plungerkolbens 34 nach rechts in Fig. 1
unter dem sich entsprechend ändernden Druckgefälle zwischen dem Druckraum 30 und dem Nachlaufraum 32 und
bei dem durch die Relativbewegung zwischen dem Primärdichtelement 10 und der Lauffläche 28 bewirkten, hydrodynamischen Aufschwimmen der dynamischen Dichtlippe 20
das Primärdichtelement 10 den Druckraum 30 gegenüber dem Nachlaufraum 32 stets (noch) ausreichend abdichtet,
ohne daß jedoch die an der Lauffläche 28 durch Adhäsion anhaftende Hydraulikflüssigkeit durch die dynamische Dichtlippe 20 übermäßig von der Lauffläche 28 abgestreift würde.

Im Ergebnis verbleibt im Betrieb stets ein Schmierfilm von ausreichender Dicke an der Lauffläche 28, um Geräuschentwicklungen infolge von Stick-Slip-Effekten zwischen der dynamische Dichtlippe 20 und der Lauffläche 28 wirksam zu vermeiden. Mit anderen Worten gesagt zielen die oben beschriebene Geometrie der Dichtkontur 24 und der sich daraus ergebende Pressungsverlauf p(x) darauf ab, daß sich die Leckagemengen am Primärdichtelement 10 in beiden Hubrichtungen des Plungerkolbens 34 im wesentlichen die Waage halten.

Die Fig. 4 zeigt eine Variante des Primärdichtelements 10, die sich von dem oben beschriebenen Primärdichtelement lediglich darin unterscheidet, daß zwischen den Kreisbogenabschnitten 78 und 80 der Dichtkontur 24 kein gerader Profilquerschnittsbereich eingefügt ist. Hier liegt der Mittelpunkt M_{R} des radiusgrößeren Kreisbogenabschnitts 80 in Richtung der Mittelachse A gesehen sodann näher an der Stützschulter 72 der dynamischen Dichtlippe 20 als der Mittelpunkt Mᵣ des radiuskleineren Kreisbogenabschnitts 78. Dadurch, daß der Dichtkontur 24 der dynamischen Dichtlippe 20 ein zwischengefügter gerader Profilquerschnittsbereich fehlt, wird der Pressungsverlauf p(x) gegenüber der Darstellung in Fig. 3 insgesamt gestaucht.

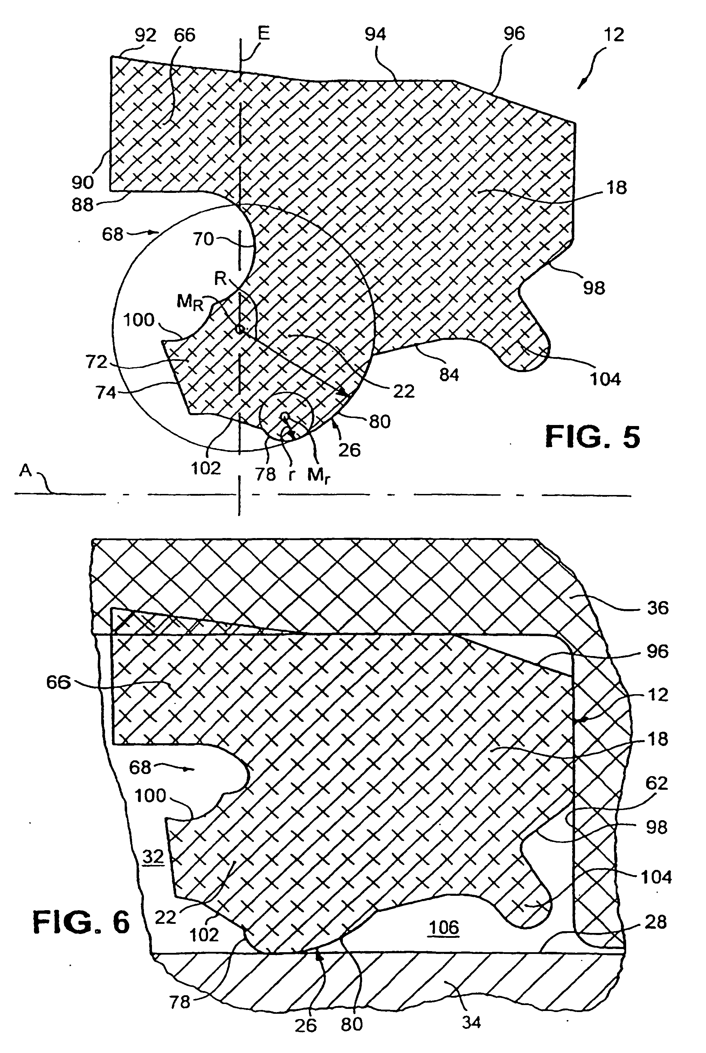

In Fig. 5 ist der Profilquerschnitt des einteiligen Sekundärdichtelements 12 gemäß Fig. 1 im unverformten, d.h. nicht eingebauten Zustand des Sekundärdichtelements 12 dargestellt, während die Fig. 6 den Profilquerschnitt des Sekundärdichtelements 12 im eingebauten Zustand zeigt, allerdings nur mit verformter dynamischer Dichtlippe 22. Das Sekundärdichtelement 12 soll im folgenden nur hinsichtlich seiner sich vom Primärdichtelement 10 unterscheidenden Merkmale beschrieben werden. Die dem Primärdichtelement 10 (im wesentlichen) entsprechenden Abschnitte bzw. Bereiche des Sekundärdichtelements 12 sind der Einfachheit halber mit den gleichen Bezugszeichen versehen. Der hier zwischen der Dichtkontur 26 der dynamischen Dichtlippe 22 und der Lauffläche 28 des Plungerkolbens 34 erzielte Pressungsverlauf p(x) entspricht - wenngleich infolge des Fehlens eines geraden Profilquerschnittsbereichs in der Dichtkontur 26 gestaucht - qualitativ dem unter Bezugnahme auf die Fig. 3 beschriebenen Pressungsverlauf p(x) und wurde deshalb nicht nochmals dargestellt.

Die Unterschiede zwischen dem Primärdichtelement 10 und dem Sekundärdichtelement 12 liegen vornehmlich im Bereich der dynamischen Dichtlippe 22 des Sekundärdichtelements 12 und dessen Übergang zum Grundkörper 18. Zunächst schließt sich am Außenumfang der dynamischen Dichtlippe 22 an die Stützschulter 72 anstelle eines geraden Profilquerschnittsbereichs ein Kreisbogenabschnitt 100 übergangslos an, der mit einem Knick zum Radius des Nutgrunds 70 übergeht. Am Innenumfang der dynamischen Dichtlippe 22 knickt die Stützschulter 72 in einen geraden Pro-filquerschnittsbereich 102 ab, der in Richtung des Grundkörpers 18 gesehen mit der Mittelachse A des Sekundärdichtelements 12 einen spitzen Winkel einschließt. An den geraden Profilquerschnittsbereich 102 schließt sich in den Fig. 5 und 6 nach rechts ggf. über einen sehr kleinen Radius die Dichtkontur 26 an, deren radiusgrößerer Kreisbogenabschnitt 80 mit einem Knick zum geraden Profilquerschnittsbereich 84 übergeht. Zwischen dem geraden Profilquerschnittsbereich 84 der dynamischen Dichtlippe 22 und der Schräge 98 des Grundkörpers 18 ist an dem Grundkörper 18 auf der Seite der dynamischen Dichtlippe 22 mit gerundeten Übergängen eine weitere Dichtlippe 104 eingefügt, deren Haupterstreckungsrichtung mit der Haupterstreckungsrichtung der dynamischen Dichtlippe 22 einen Winkel von im wesentlichen 90° einschließt. Im eingebauten Zustand des Dichtelements 12 bildet die weitere Dichtlippe 104 zusammen mit der dynamischen Dichtlippe 22 über der Lauffläche 28 ein Reservoir 106 zur Aufnahme eines zusätzlichen Schmiermittels aus (Fig. 6).

Untersuchungen der Anmelderin haben ergeben, daß es gleichermaßen für Primärdichtelemente 10 und Sekundärdichtelemente 12 im Hinblick auf die aufgabengemäß gewollte Wirkung der Dichtelemente von Vorteil ist, wenn das Verhältnis R/r des größeren Radius R zum kleineren Radius r der Kreisbogenabschnitte 78, 80 zwischen 3.0 und 9.0, vorzugsweise zwischen 5.0 und 6.0 liegt. Ist ein gerader Profilquerschnittsbereich 82 zwischen den Kreisbogenabschnitten 78, 80 eingefügt, sollte das Verhältnis L/r der Länge L des geraden Profilquerschnittsbereichs 82 (siehe Fig. 3) zum Radius r des kleineren Kreisbogenabschnitts 78 kleiner gleich 2, vorzugsweise kleiner gleich 1 sein. Ferner sollte im unverformten Zustand des Dichtelements 10, 12 die Differenz zwischen dem Durchmesser d_{d} der dynamischen Dichtlippe 20, 22 an der Dichtkontur 24, 26 und dem Nenndurchmesser D_{L} der Lauffläche 28 (vergl. Fig. 1) 1.5 bis 9.0 %, vorzugsweise 2.5 bis 6.5 % des Nenndurchmessers D_{L} der Lauffläche 28 betragen.

Insbesondere wurden Dichtelemente 10, 12 aus EPDM (von Ethylen-Propylen-Dien und Polymethylen abgeleitete Abkürzung) mit Härten zwischen 70 und 80 Shore A und Zugfestigkeiten größer gleich 16 N/mm² für Laufflächen 28 mit Nenndurchmessern D_{L} zwischen 10.0 und 24.0 mm untersucht. Dabei hat es sich insbesondere im Nenndurchmesserbereich zwischen 14.0 und 20.0 mm als hinsichtlich der aufgabengemäß gewollten Wirkung vorteilhaft erwiesen, wenn im unverformten Zustand des Dichtelements 10, 12 der Nutgrund 70 der zwischen der dynamischen Dichtlippe 20, 22 und der statischen Dichtlippe 66 ausgebildeten Nut 68 bezüglich einer gedachten Ebene E, die senkrecht zur Mittelachse A des Dichtelements 10, 12 verläuft und im Schnitt gesehen den dem freien Ende bzw. der Stützschulter 72 der dynamischen Dichtlippe 20, 22 nächstgelegenen Mittelpunkt Mᵣ bzw. M_{R} der Kreisbogenabschnitte 78 bzw. 80 der Dichtkontur 24, 26 enthält, in einer zur Mittelachse A parallelen Richtung vom Grundkörper 16, 18 her kommend zwischen 1.5 mm vor und 1.0 mm hinter der Ebene E liegt. In den in den Fig. 2, 4 und 5 dargestellten Ausführungsbeispielen liegt der Nutgrund 70 jeweils vor der gedachten Ebene E. Bei diesen Laufflächen-Nenndurchmessern D_{L} sollte weiterhin der Radius r des kleineren Kreisbogenabschnitts 78 der Dichtkontur 24, 26 zwischen 0.2 und 0.5 mm und der Radius R des größeren Kreisbogenabschnitts zwischen 1.5 und 1.8 mm liegen, während die Länge L des ggf. vorhandenen geraden Profilquerschnittsbereichs 82 zwischen den Kreisbogenabschnitten 78 und 80 kleiner gleich 0.4 mm sein sollte. Die jeweilige Einbauverformung der dynamischen Dichtlippe 20, 22 in radialer Richtung betrug hier in absoluten Zahlen zwischen 0.2 mm und 0.6 mm. Eine Vergrößerung des Bereichs für den Nenndurchmesser D_{L} auf 8.0 bis 38.0 mm ist denkbar.

Für schwierige Anwendungsfälle (aggressive Hydraulikmedien, großer Temperatureinsatzbereich, sehr glatte Laufflächen) hat sich in Versuchen als zusätzliches Schmiermittel im Reservoir 106 zwischen der dynamische Dichtlippe 22 und der weiteren Dichtlippe 104 des Sekundärdichtelements 12 ein Schmierfett auf Basis von perfluorierten Polyetherölen mit einem Verdicker, vorzugsweise PTFE (Polytetrafluorethylen) in Kombination mit den beschriebenen Dichtkonturen 24, 26 der dynamischen Dichtlippen 20, 22 bewährt.

In den dargestellten Ausführungsbeispielen sind die Dichtelemente 10, 12 ortsfest im Zylindergehäuse 38 angeordnet, während der Plungerkolben 34 mit seiner Lauffläche 28 relativ zu den Dichtelementen 10, 12 bewegbar ist. Für den Fachmann ist ersichtlich, daß eines oder beide der Dichtelemente aber auch an einem Kolben befestigt werden kann, um sich relativ zu einer feststehenden Lauffläche des Zylindergehäuses zu bewegen (Kolben-Zylinder-Anordnung in Normalausführung), wobei die dann radial außen liegende dynamische Dichtlippe des jeweiligen Dichtelements zum Erhalt des beschriebenen Pressungsverlaufs p(x) entsprechend den obigen Ausführungen auszubilden ist.

### Bezugszeichenliste

- 10: Primärdichtelement
- 12: Sekundärdichtelement
- 14: Kolben-Zylinder-Anordnung
- 16: Grundkörper
- 18: Grundkörper
- 20: dynamische Dichtlippe
- 22: dynamische Dichtlippe
- 24: Dichtkontur
- 26: Dichtkontur
- 28: Lauffläche
- 30: Druckraum
- 32: Nachlaufraum
- 34: Plungerkolben
- 36: Führungshülse
- 38: Zylindergehäuse
- 40: O-Ring
- 42: Absatz
- 44: Zylinderbohrung
- 46: Stützring
- 48: konischer Flächenabschnitt
- 50: ringförmige Stirnfläche
- 52: Kanal
- 54: Ringteil
- 56: Nut
- 58: Ringspalt
- 60: Nut
- 62: Absatz
- 64: Ringschulter
- 66: statische Dichtlippe
- 68: ringförmige Nut
- 70: Nutgrund
- 72: Stützschulter
- 74: gerader Profilquerschnittsbereich
- 76: gerader Profilquerschnittsbereich
- 78: kleinerer Kreisbogenabschnitt
- 80: größerer Kreisbogenabschnitt
- 82: gerader Profilquerschnittsbereich
- 84: gerader Profilquerschnittsbereich
- 86: gerader Profilquerschnittsbereich
- 88: paralleler Profilquerschnittsbereich
- 90: senkrechter Profilquerschnittsbereich
- 92: gerader Profilquerschnittsbereich
- 94: paralleler Profilquerschnittsbereich
- 96: Schräge
- 98: Schräge
- 100: Kreisbogenabschnitt
- 102: gerader Profilquerschnittsbereich
- 104: weitere Dichtlippe
- 106: Reservoir

- A: verschobene Mittelachse des Dichtelements
- d_{d}: kleinster Durchmesser der dynamischen Dichtlippe
- D_{L}: Nenndurchmesser der Lauffläche
- E: gedachte Ebene
- L: Länge des geraden Abschnitts der Dichtkontur
- r: Radius des kleineren Kreisbogenabschnitts
- Mᵣ: dazugehöriger Kreismittelpunkt
- R: Radius des größeren Kreisbogenabschnitts
- M_{R}: dazugehöriger Kreismittelpunkt

## Patentansprüche

1. Hydraulische Kolben-Zylinder-Anordnung (14), insbesondere Geber- oder Nehmerzylinder von hydraulischen Kupplungsbetätigungs- oder Bremssystemen in Kraftfahrzeugen, mit einem Dichtelement (10, 12), das einen Grundkörper (16, 18) und eine sich davon weg erstreckende dynamische Dichtlippe (20, 22) aufweist, die im eingebauten Zustand des Dichtelements (10, 12) mit einer konvex gekrümmten Dichtkontur (24, 26) mit einer relativ zum Dichtelement (10, 12) bewegbaren Lauffläche (28) der Kolben-Zylinder-Anordnung (14) zusammenwirkt, um einen Raum (30 bzw. 32) der Kolben-Zylinder-Anordnung (14) abzudichten, wobei die Dichtkontur (24, 26) der dynamischen Dichtlippe (20, 22) auf ihrer im eingebauten Zustand des Dichtelements (10, 12) dem abzudichtenden Raum (30 bzw. 32) zugewandten Seite stärker gekrümmt ist als auf ihrer davon abgewandten Seite, so daß sich zwischen der dynamischen Dichtlippe (20, 22) und der Lauffläche (28) ein unsymmetrischer Pressungsverlauf p(x) einstellt, welcher auf der dem abzudichtenden Raum (30 bzw. 32) zugewandten Seite steiler ansteigt, wobei die Dichtkontur (24, 26) der dynamischen Dichtlippe (20, 22) im unverformten Zustand des Dichtelements (10, 12) zwei Kreisbogenabschnitte (78, 80) mit unterschiedlichen Radien (r, R) aufweist, von denen der Kreisbogenabschnitt (78) mit kleinerem Radius (r) auf der im eingebauten Zustand des Dichtelements (10, 12) dem abzudichtenden Raum (30 bzw. 32) zugewandten Seite der Dichtkontur (24, 26) liegt, und wobei im Betrieb stets beide Kreisbogenabschnitte (78, 80) mit der Lauffläche (28) der Kolben-Zylinder-Anordnung (14) zusammenwirken.

2. Kolben-Zylinder-Anordnung (14) nach Anspruch 1, wobei das Verhältnis (R/r) des größeren Radius (R) zum kleineren Radius (r) der Kreisbogenabschnitte (78, 80) zwischen 3.0 und 9.0, vorzugsweise zwischen 5.0 und 6.0 liegt.

3. Kolben-Zylinder-Anordnung (14) nach Anspruch 1 oder 2, wobei die Dichtkontur (24) der dynamischen Dichtlippe (20) des Dichtelements (10) zwischen den Kreisbogenabschnitten (78, 80) einen geraden Abschnitt (82) aufweist.

4. Kolben-Zylinder-Anordnung (14) nach Anspruch 3, wobei der gerade Abschnitt (82) der Dichtkontur (24) übergangslos in die Kreisbogenabschnitte (78, 80) übergeht.

5. Kolben-Zylinder-Anordnung (14) nach Anspruch 3 oder 4 wobei der gerade Abschnitt (82) der Dichtkontur (24) im unverformten Zustand des Dichtelements (10) parallel zu dessen Mittelachse (A) verläuft.

6. Kolben-Zylinder-Anordnung (14) nach einem der Ansprüche 3 bis 5 wobei das Verhältnis (L/r) der Länge (L) des geraden Abschnitts (82) zum Radius (r) des kleineren Kreisbogenabschnitts (78) kleiner gleich 2, vorzugsweise kleiner gleich 1 ist.

7. Kolben-Zylinder-Anordnung (14) nach einem der vorhergehenden Ansprüche wobei unverformten Zustand des Dichtelements (10, 12) die Differenz zwischen dem Durchmesser (d_{d}) der dynamischen Dichtlippe (20, 22) an der Dichtkontur (24, 26) und dem Nenndurchmesser (D_{L}) der Lauffläche (28) 1.5 bis 9.0 %, vorzugsweise 2.5 bis 6.5 % des Nenndurchmessers (D_{L}). der Lauffläche (28) beträgt.

8. Kolben-Zylinder-Anordnung (14) nach einem der vorhergehenden Ansprüche wobei eine sich vom Grundkörper (16, 18) des Dichtelements (10, 12) weg erstreckende statische Dichtlippe (66) vorgesehen ist, welche zusammen mit der dynamischen Dichtlippe (20, 22) eine ringförmige Nut (68) begrenzt, deren Nutgrund (70) eine über den Umfang des Dichtelements (10, 12) im wesentlichen konstante Tiefe aufweist.

9. Kolben-Zylinder-Anordnung (14) nach einem der vorhergehenden Ansprüche wobei der Nenndurchmesser (D_{L}) der mit dem Dichtelement (10, 12) zusammenwirkenden Lauffläche (28) zwischen 10.0 und 24.0 mm, vorzugsweise zwischen 14.0 und 20.0 mm liegt.

10. Kolben-Zylinder-Anordnung (14) nach Anspruch 8 und 9 wobei im unverformten Zustand des Dichtelements (10, 12) der Nutgrund (70) bezüglich einer gedachten Ebene (E), die senkrecht zur Mittelachse (A) des Dichtelements (10, 12) verläuft und im Schnitt gesehen den einem freien Ende der dynamischen Dichtlippe (20, 22) nächstgelegenen Mittelpunkt (Mᵣ, M_{R}) der Kreisbogenabschnitte (78, 80) der Dichtkontur (24, 26) enthält, in einer zur Mittelachse (A) parallelen Richtung vom Grundkörper (16, 18) her kommend zwischen 1.5 mm vor und 1.0 mm hinter der Ebene (E) liegt.

11. Kolben-Zylinder-Anordnung (14) nach einem der vorhergehenden Ansprüche wobei sich an die konvex gekrümmte Dichtkontur (24, 26) der dynamischen Dichtlippe (20, 22) an deren freien Ende eine im unverformten Zustand des Dichtelements (10, 12) im wesentlichen ringzylindrische Stützschulter (72) anschließt.

12. Kolben-Zylinder-Anordnung (14) nach einem der vorhergehen den Ansprüche wobei an dem Grundkörper (18) des Dichtelements (12) auf der Seite der dynamischen Dichtlippe (22) eine weitere Dichtlippe (104) vorgesehen ist, die im eingebauten Zustand des Dichtelements (12) zusammen mit der dynamischen Dichtlippe (22) ein Reservoir (106) zur Aufnahme eines zusätzlichen Schmiermittels ausbildet.

13. Kolben-Zylinder-Anordnung (14) nach einem der vorhergehen den Ansprüche wobei das Dichtelement (10, 12) einteilig ist und aus EPDM besteht.

14. Kolben-Zylinder-Anordnung (14) nach einem der vorhergehenden Ansprüche wobei das Dichtelement (10, 12) eine Härte von 70 bis 80 Shore A aufweist.

15. Kolben-Zylinder-Anordnung (14) nach einem der vorhergehenden Ansprüche wobei das Dichtelement (10, 12) eine Zugfestigkeit größer gleich 16 N/mm² aufweist.

16. Kolben-Zylinder-Anordnung (14) nach einem der vorhergehenden Ansprüche wobei der Grundkörper (16) des Dichtelements (10) stirnseitig nach radial außen und nach radial innen mit jeweils einer Schräge (96, 98) versehen ist, wobei ein komplementär ausgebildeter Stützring (46) vorgesehen ist, an dem sich das Dichtelement (10) im eingebauten Zustand mit seinem Grundkörper (16) abstützt.

## Claims

1. Hydraulic piston/cylinder arrangement (14), in particular a master or slave cylinder of hydraulic clutch actuation or brake systems in motor vehicles, comprising a sealing element (10, 12) which has a basic body (16, 18) and a dynamic sealing lip (20, 22) which extends away therefrom, which sealing lip in the installed state of the sealing element (10, 12) cooperates by means of a convexly curved sealing contour (24, 26) with a bearing surface (28) of the piston/cylinder arrangement (14), in order to seal a chamber (30 or 32) of the piston/cylinder arrangement (14), it being possible for said bearing surface (28) to move relative to the sealing element (10, 12), wherein the sealing contour (24, 26) of the dynamic sealing lip (20, 22) is curved to a greater extent on its side which in the installed state of the sealing element (10, 12) faces towards the chamber (30 or 32) to be sealed than on its side facing away therefrom, so that an asymmetrical pressure gradient p(x) is set between the dynamic sealing lip (20, 22) and the bearing surface (28), said pressure gradient rising more steeply on the side facing towards the chamber (30 or 32) to be sealed, wherein the sealing contour (24, 26) of the dynamic sealing lip (20, 22), in the non-deformed state of the sealing element (10, 12), has two circular arc portions (78, 80) having different radii (r, R), of which the circular arc portion (78) with the smaller radius (r) lies on the side of the sealing contour (24, 26) which faces towards the chamber (30 or 32) to be sealed in the installed state of the sealing element (10, 12), and wherein, during operation, always both circular arc portions (78, 80) cooperate with the bearing surface (28) of the piston/cylinder arrangement (14).

2. Piston/cylinder arrangement (14) according to Claim 1, wherein the ratio (R/r) of the larger radius (R) to the smaller radius (r) of the circular arc portions (78, 80) is between 3.0 and 9.0, preferably between 5.0 and 6.0.

3. Piston/cylinder arrangement (14) according to Claim 1 or 2, wherein the sealing contour (24) of the dynamic sealing lip (20) of the sealing element (10) has a straight portion (82) between the circular arc portions (78, 80).

4. Piston/cylinder arrangement (14) according to Claim 3, wherein the straight portion (82) of the sealing contour (24) merges smoothly into the circular arc portions (78, 80).

5. Piston/cylinder arrangement (14) according to Claim 3 or 4, wherein the straight portion (82) of the sealing contour (24), in the non-deformed state of the sealing element (10), runs parallel to the central axis (A) thereof.

6. Piston/cylinder arrangement (14) according to any of Claims 3 to 5, wherein the ratio (L/r) of the length (L) of the straight portion (82) to the radius (r) of the smaller circular arc portion (78) is less than or equal to 2, preferably less than or equal to 1.

7. Piston/cylinder arrangement (14) according to any of the preceding claims, wherein, in the non-deformed state of the sealing element (10, 12), the difference between the diameter (d_{d}) of the dynamic sealing lip (20, 22) on the sealing contour (24, 26) and the nominal diameter (D_{L}) of the bearing surface (28) is 1.5 to 9.0%, preferably 2.5 to 6.5%, of the nominal diameter (D_{L}) of the bearing surface (28).

8. Piston/cylinder arrangement (14) according to any of the preceding claims, wherein there is provided a static sealing lip (66) which extends away from the basic body (16, 18) of the sealing element (10, 12), which static sealing lip, together with the dynamic sealing lip (20, 22), delimits an annular groove (68), the groove bottom (70) of which has an essentially constant depth over the entire sealing element (10, 12).

9. Piston/cylinder arrangement (14) according to any of the preceding claims, wherein the nominal diameter (D_{L}) of the bearing surface (28) which cooperates with the sealing element (10, 12) is between 10.0 and 24.0 mm, preferably between 14.0 and 20.0 mm.

10. Piston/cylinder arrangement (14) according to Claims 8 and 9, wherein, in the non-deformed state of the sealing element (10, 12), the groove bottom (70) lies, in a direction parallel to the central axis (A), between 1.5 mm in front of and 1.0 mm behind an imaginary plane (E) which runs perpendicular to the central axis (A) of the sealing element (10, 12) and, seen in section, contains the centre point (Mᵣ, M_{R}) of the circular arc portions (78, 80) of the sealing contour (24, 26) nearest to a free end of the dynamic sealing lip (20, 22).

11. Piston/cylinder arrangement (14) according to any of the preceding claims, wherein a supporting shoulder (72) which is essentially cylindrical in the non-deformed state of the sealing element (10, 12) adjoins the convexly curved sealing contour (24, 26) of the dynamic sealing lip (20, 22) at the free end thereof.

12. Piston/cylinder arrangement (14) according to any of the preceding claims, wherein a further sealing lip (104) is provided on the basic body (18) of the sealing element (12) on the same side as the dynamic sealing lip (22), which further sealing lip, together with the dynamic sealing lip (22), forms a reservoir (106) for accommodating an additional lubricant in the installed state of the sealing element (12).

13. Piston/cylinder arrangement (14) according to any of the preceding claims, wherein the sealing element (10, 12) is formed in one piece and is made of EPDM.

14. Piston/cylinder arrangement (14) according to any of the preceding claims, wherein the sealing element (10, 12) has a hardness of 70 to 80 Shore A.

15. Piston/cylinder arrangement (14) according to any of the preceding claims, wherein the sealing element (10, 12) has a tensile strength of greater than or equal to 16 N/mm².

16. Piston/cylinder arrangement (14) according to any of the preceding claims, wherein the basic body (16) of the sealing element (10) is provided in each case with a bevel (96, 98) radially outwards and radially inwards on its end face, wherein a bearing ring (46) of complementary shape is provided, against which the sealing element (10) bears with its basic body (16) in the installed state.

## Revendications

1. Agencement hydraulique à piston-et-cylindre (14), en particulier cylindre émetteur ou cylindre récepteur de systèmes hydrauliques d'actionnement d'embrayage ou de freinage dans des véhicules automobiles, comportant un élément d'étanchéité (10, 12) qui présente un corps de base (16, 18) et une lèvre d'étanchéité (20, 22) dynamique s'étendant en éloignement de celui-ci, laquelle coopère, à l'état de montage de l'élément d'étanchéité (10, 12), avec un contour d'étanchéité (24, 26) de courbure convexe, par une surface de déplacement (28), déplaçable par rapport à l'élément d'étanchéité (10, 12), de l'agencement à piston-et-cylindre (14) pour étancher un espace (30 ou 32, respectivement) de l'agencement à piston-et-cylindre (14), le contour d'étanchéité (24, 26) de la lèvre d'étanchéité (20, 22) dynamique étant plus fortement courbé sur sa face tournée vers l'espace à étancher (30, 32), à l'état de montage de l'élément d'étanchéité (10, 12), que sur sa face détournée dudit espace, de sorte qu'entre la lèvre d'étanchéité (20, 22) dynamique et la surface de déplacement (28) s'établit une allure de pressage p(x) asymétrique qui monte plus fortement sur la face tournée vers l'espace à étancher (30, 32), le contour d'étanchéité (24, 26) de la lèvre d'étanchéité (20, 22) dynamique présentant, à l'état non déformé de l'élément d'étanchéité (10, 12), deux tronçons d'arc de cercle (78, 80) avec différents rayons (r, R), dont le tronçon d'arc de cercle (78) à plus petit rayon (r) est situé, à l'état de montage de l'élément d'étanchéité (10, 12), sur la face du contour d'étanchéité (24, 26) qui est tournée vers l'espace (30, 32) à étancher, et en fonctionnement, les deux tronçons d'arc de cercle (78, 80) coopèrent toujours avec la surface de déplacement (28) de l'agencement à piston-et-cylindre (14).

2. Agencement à piston-et-cylindre (14) selon la revendication 1, dans lequel le rapport (R/r) du grand rayon (R) sur le petit rayon (r) des tronçons d'arc de cercle (78, 80) est entre 3,0 et 9,0, de préférence entre 5,0 et 6,0.

3. Agencement à piston-et-cylindre (14) selon l'une ou l'autre des revendications 1 et 2, dans lequel le contour d'étanchéité (24) de la lèvre d'étanchéité (20) dynamique de l'élément d'étanchéité (10) présente un tronçon (82) rectiligne entre les tronçons d'arc de cercle (78, 80).

4. Agencement à piston-et-cylindre (14) selon la revendication 3, dans lequel le tronçon rectiligne (82) du contour d'étanchéité (24) passe sans transition dans les tronçons d'arc de cercle (78, 80).

5. Agencement à piston-et-cylindre (14) selon l'une ou l'autre des revendications 3 et 4, dans lequel le tronçon rectiligne (82) du contour d'étanchéité (24), à l'état non déformé de l'élément d'étanchéité (10), s'étend parallèlement à son axe médian (A).

6. Agencement à piston-et-cylindre (14) selon l'une des revendications 3 à 5, dans lequel le rapport (L/r) de la longueur (L) du tronçon rectiligne (82) sur le rayon (r) du plus petit tronçon d'arc de cercle (78) est inférieur/égal à 2, de préférence inférieur/égal à 1.

7. Agencement à piston-et-cylindre (14) selon l'une des revendications précédentes, dans lequel à l'état non déformé de l'élément d'étanchéité (10, 12), la différence entre le diamètre (d_{d}) de la lèvre d'étanchéité dynamique (20, 22) sur le contour d'étanchéité (24, 26) et le diamètre nominal (D_{L}) de la surface de déplacement (28) est de 1,5 à 9,0 %, de préférence 2,5 à 6,5 % du diamètre nominal (D_{L}) de la surface de déplacement (28).

8. Agencement à piston-et-cylindre (14) selon l'une des revendications précédentes, dans lequel il est prévu une lèvre d'étanchéité statique (66) s'étendant en éloignement du corps de base (16, 18) de l'élément d'étanchéité (10, 12), laquelle délimite conjointement avec la lèvre d'étanchéité dynamique (20, 22) une gorge annulaire (68) dont le fond de gorge (70) présente une profondeur sensiblement constante sur la périphérie de l'élément d'étanchéité (10, 12).

9. Agencement à piston-et-cylindre (14) selon l'une des revendications précédentes, dans lequel le diamètre nominal (D_{L}) de la surface de déplacement coopérant avec l'élément d'étanchéité (10, 12) est entre 10,0 et 24,0 mm, de préférence entre 14,0 et 20,0 mm.

10. Agencement à piston-et-cylindre (14) selon la revendication 8 et la revendication 9, dans laquelle à l'état non déformé de l'élément d'étanchéité (10, 12), le fond de gorge (70) est situé, par rapport à un plan imaginaire (E) qui s'étend perpendiculairement à l'axe médian (A) de l'élément d'étanchéité (10, 12) et qui, vu en coupe, contient le centre (Mᵣ, M_{R}), situé le plus près d'une extrémité libre de la lèvre d'étanchéité dynamique (20, 22), des tronçons d'arc de cercle (78, 80) du contour d'étanchéité (24, 26), entre 1,5 mm devant et 1,0 mm derrière le plan (E) dans une direction parallèle à l'axe médian (A), en venant depuis le corps de base (16, 18).

11. Agencement à piston-et-cylindre (14) selon l'une des revendications précédentes, dans lequel un épaulement d'appui (72) sensiblement cylindrique annulaire à l'état non déformé de l'élément d'étanchéité (10, 12) se raccorde au contour d'étanchéité (24, 26) de courbure convexe de la lèvre d'étanchéité dynamique (20, 22), au niveau de son extrémité libre.

12. Agencement à piston-et-cylindre (14) selon l'une des revendications précédentes, dans lequel sur le corps de base (18) de l'élément d'étanchéité (12) et sur la face de la lèvre d'étanchéité dynamique (22) est prévue une autre lèvre d'étanchéité (104) qui, à l'état de montage de l'élément d'étanchéité (12), forme conjointement avec la lèvre d'étanchéité dynamique (22) un réservoir (106) pour recevoir un lubrifiant additionnel.

13. Agencement à piston-et-cylindre (14) selon l'une des revendications précédentes, dans lequel l'élément d'étanchéité (10, 12) est d'un seul tenant et réalisé en EPDM.

14. Agencement à piston-et-cylindre (14) selon l'une des revendications précédentes, dans lequel l'élément d'étanchéité (10, 12) présente une dureté Shore A de 70 à 80.

15. Agencement à piston-et-cylindre (14) selon l'une des revendications précédentes, dans lequel l'élément d'étanchéité (10, 12) présente une résistance à la traction supérieure/égale à 16 N/mm².

16. Agencement à piston-et-cylindre (14) selon l'une des revendications précédentes, dans lequel le corps de base (16) de l'élément d'étanchéité (10) est pourvu d'un chanfrein respectif (96, 98) sur la face frontale radialement vers l'extérieur et radialement vers l'intérieur, et il est prévu un anneau de soutien (46) réalisé de manière complémentaire, sur lequel l'élément d'étanchéité (10) s'appuie avec son corps de base (16) à l'état de montage.
